# EUROPEAN PATENT APPLICATION

(11) **EP 4 601 148 A1**
(43) Date of publication of application: **13.08.2025**
(21) Application number: 23912850.7
(22) Date of filing: 26.12.2023
(51) Int. Cl.: H02J 7/00

(54) **MODULE BALANCING METHOD AND BATTERY MANAGEMENT SYSTEM EMPLOYING THE SAME**

(30) Priority: 26.12.2022 KR 20220184461; 22.12.2023 KR 20230190074
(71) Applicant: LG Energy Solution, Ltd., Seoul 07335 (KR)
(72) Inventor: SUNG, Chang Hyun, Daejeon 34122 (KR)
(74) Representative: Plasseraud IP
(86) International application number: PCT/KR2023/021529
(87) International publication number: WO 2024/144175

(57) **Abstract**

Disclosed are a module balancing method and a battery management system, the system including: a charge equalization circuit performing module balancing between a first module including a plurality of central cells each having a potential falling within a central potential range, a second module including at least one lower cell having a potential falling within a lower potential range, and a third module including at least one upper cell having a potential falling within an upper potential range, among the plurality of battery cells connected in series with each other; and a control unit calculating each module voltage of the first module, the second module, and the third module based on each cell voltage of the plurality of battery cells, determining an energy transfer direction based on the calculated module voltage, and controlling the module balancing based on the determined energy transfer direction.

## Description

### [Technical Field]

### CROSS-REFERENCE TO RELATED APPLICATION

This application claims priority to and the benefit of Korean Patent Application No. 10-2022-0184461 filed in the Korean Intellectual Property Office on December 26, 2022, and Korean Patent Application No. 10-2023-0190074 filed in the Korean Intellectual Property Office on December 22, 2023, the entire contents of which are incorporated herein by reference.

The present disclosure relates to a module balancing method and a battery management system.

### [Background Art]

Battery cell balancing may be a method of reducing a voltage difference between a plurality of battery cells that occurs during a charging/discharging voltage behavior of the plurality of cells connected in series with each other. For example, among a first battery cell and a second battery cell, a cell voltage of the second battery cell may reach 4.0 when a cell voltage of the first battery cell reaches a reference voltage (for example, 4.2 V) during a charging process. In this case, the charging needs to be stopped to prevent overcharging of the first battery cell. However, in this case, an entire charging capacity of the battery may be reduced because the second battery cell is not sufficiently charged. The cell balancing may be performed when the plurality of battery cells have different voltages as above. A circuit (hereinafter, 'cell balancing circuit') that may discharge the plurality of cells may be implemented in a battery management system (hereinafter, 'BMS') to reduce the voltage difference between the plurality of battery cells.

The cell balancing includes passive cell balancing and active cell balancing. The passive cell balancing is a method of selecting the battery cell having a higher voltage and dissipating charging energy of the selected battery cell by using a discharging resistor. The active cell balancing is a method of transferring the charging energy from the battery cell having the higher voltage to the battery cell having a lower voltage.

Meanwhile, the passive cell balancing may have low efficiency because the energy is lost as heat by the discharging resistor. On the other hand, the active cell balancing may have superior energy efficiency than the passive cell balancing. However, the cell balancing circuit for implementing the active cell balancing may be very complex, occupy a lot of space in the battery system, and need more parts, resulting in a high cost burden.

### [Disclosure]

### [Technical Problem]

The present disclosure attempts to provide a method of performing active module balancing between battery modules by using a simple charge equalization circuit, and a battery management system.

### [Technical Solution]

According to an embodiment, a battery management system includes: a charge equalization circuit performing module balancing between a first module including a plurality of central battery cells each having a potential falling within a central potential range, a second module including at least one lower battery cell having a potential falling within a lower potential range, and a third module including at least one upper battery cell having a potential falling within an upper potential range, among the plurality of battery cells connected in series with each other; and a control unit calculating each module voltage of the first module, the second module, and the third module based on each cell voltage of the plurality of battery cells, determining an energy transfer direction based on the calculated module voltage, and controlling the module balancing based on the determined energy transfer direction.

The central potential range may include a central potential disposed in a center of a plurality of potential sizes of the plurality of battery cells and a potential falling within the upper or lower range of a predetermined size from the central potential, the lower potential range may include a minimum potential the plurality of potential sizes of among the plurality of battery cells and a potential falling within a range of a predetermined size from the minimum potential, and the upper potential range may include a maximum potential among the plurality of potential sizes of the plurality of battery cells and a potential falling within a range of a predetermined size from the maximum potential.

The first module may include the plurality of central battery cells corresponding to integer multiples of an even number.

The charge equalization circuit may include a first equalization circuit including a central balancing switch, a first upper inductor connected between a positive electrode of the first module and one end of the central balancing switch, a first lower inductor connected between a negative electrode of the first module and the other end of the central balancing switch, a first central diode and a second central diode connected in series with each other between a first node and a second node, and a balancing path connecting a center of the plurality of central battery cells included in the first module to a center of the first central diode and the second central diode, the first node may be disposed between the first upper inductor and one end of the central balancing switch, and the second node may be disposed between the first lower inductor and the other end of the central balancing switch.

The charge equalization circuit may include a second equalization circuit including a lower balancing switch, a second lower inductor connected between a positive electrode of the second module and one end of the lower balancing switch, and a lower diode connected between both ends of the lower balancing switch.

The charge equalization circuit may include a third equalization circuit including an upper balancing switch, a second upper inductor connected between a negative electrode of the third module and the other end of the upper balancing switch, and an upper diode connected between both ends of the upper balancing switch.

The control unit may control the central balancing switch to be turned off when a predetermined time elapses after turning on the central balancing switch when the module voltage of the first module is more than each module voltage of the second module and the third module.

The control unit may control the lower balancing switch and the upper balancing switch to be turned off when a predetermined time elapses after turning on the lower balancing switch and the upper balancing switch when each module voltage of the second module and the third module is more than the module voltage of the first module.

According to another embodiment, a module balancing method, which is a method of performing module balancing between a plurality of battery modules, includes: monitoring a cell voltage of the plurality of battery cells connected in series with each other to determine each module voltage of a first module including a plurality of central battery cells each having a potential falling within a central potential range, a second module including at least one lower battery cell having a potential falling within a lower potential range, and a third module including at least one upper battery cell having a potential falling within an upper potential range, among the plurality of battery cells connected in series with each other; determining an energy transfer direction by comparing the module voltage of the first module with each module voltage of the second module and the third module; and performing the module balancing between the first module, the second module, and the third module for energy to be transferred in the determined energy transfer direction.

The determining of the energy transfer direction may include determining whether the module voltage of the first module is more than each module voltage of the second module and the third module, and determining whether each module voltage of the second module and the third module is more than the module voltage of the first module when the module voltage of the first module is not more than each module voltage of the second module and the third module as a determination result.

The performing of the module balancing may include performing the module balancing for energy to be transferred from the first module to the second module and the third module when the module voltage of the first module is more than each module voltage of the second module and the third module, and performing the module balancing for energy to be transferred from the second module and the third module to the first module when each module voltage of the second module and the third module is more than the module voltage of the first module.

### [Advantageous Effects]

The present disclosure may have the fewer components in the charge equalization circuit to thus lower the costs, and have the less space occupied by the charge equalization circuit in the BMS.

The present disclosure may extend the lifespan of the entire battery by slowing down the deterioration rate of the battery cell disposed in the center and having the greatest deterioration level among the plurality of battery cells connected in series with each other.

The present disclosure may ensure the higher energy efficiency of the battery by performing the active balancing.

### [Description of the Drawings]

FIG. 1 is a block diagram showing a battery system according to an embodiment.
FIGS. 2 to 6 are example views each showing in detail the battery and charge equalization circuit of FIG. 1.
FIGS. 7 and 8 are example views each showing the charge equalization circuit transferring energy from a central module to an outer module.
FIG. 9 is an example view showing a waveform of a current flowing through the central module and the outer module in FIGS. 7 and 8.
FIG. 10 is another example view showing the waveform of the current flowing through the central module and the outer module in FIGS. 7 and 8.
FIGS. 11 and 12 are example views each showing the charge equalization circuit transferring energy from the outer module to the central module.
FIG. 13 is an example view showing a waveform of a current flowing through the central module and the outer module in FIGS. 11 and 12.
FIG. 14 is a flowchart showing a module balancing method according to another embodiment.

### [Mode for Invention]

Hereinafter, embodiments disclosed in the specification are described in detail with reference to the accompanying drawings, the same or similar components are denoted by the same or similar reference numerals, and an overlapping description thereof is omitted. Terms "module" and/or "unit" for components described in the following description are used only to make the specification easily understood. Therefore, these terms do not have meanings or roles distinguished from each other in themselves. Further, in describing the embodiments disclosed in the specification, a detailed description of a case where it is decided that the detailed description of the known art related to the present disclosure may obscure the gist is omitted. Furthermore, it is to be understood that the accompanying drawings are provided only to allow the embodiments of the present disclosure to be easily understood, and the spirit of the present disclosure is not limited by the accompanying drawings and includes all the modifications, equivalents and substitutions included in the spirit and scope of the present disclosure.

Terms including ordinal numbers such as "first", "second", and the like, may be used to describe various components. However, these components are not limited by these terms. These terms are used only to distinguish one component from another component.

It is to be understood that when one component is referred to as being "connected to" or "coupled to" another component, one component may be directly connected or coupled to another component, or may be connected or coupled to another component while having a third component interposed therebetween. On the other hand, it is to be understood that if one component is referred to as being "connected directly to" or "coupled directly to" another component, one component may be connected to or coupled to another component without a third component interposed therebetween.

It is to be understood that terms "include", "have" and the like used in the present application specify the presence of features, numerals, steps, operations, components, parts or combinations thereof, mentioned in the specification, and do not preclude the presence or possible addition of one or more other features, numerals, steps, operations, components, parts or combinations thereof.

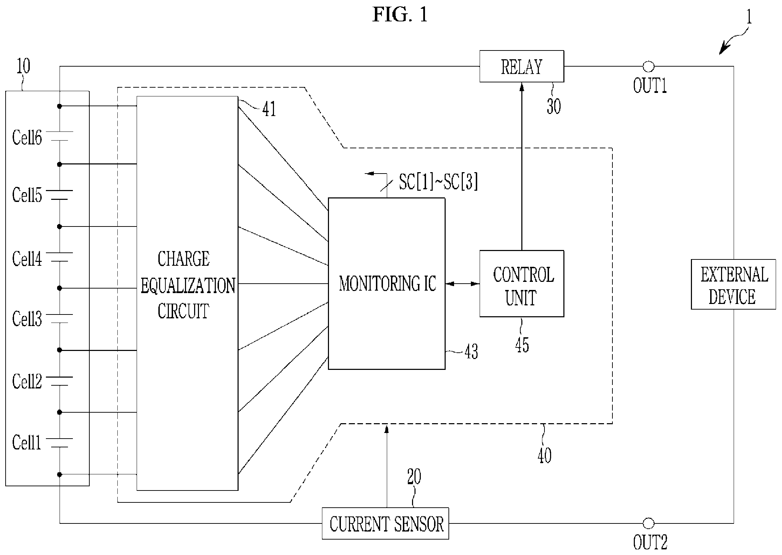

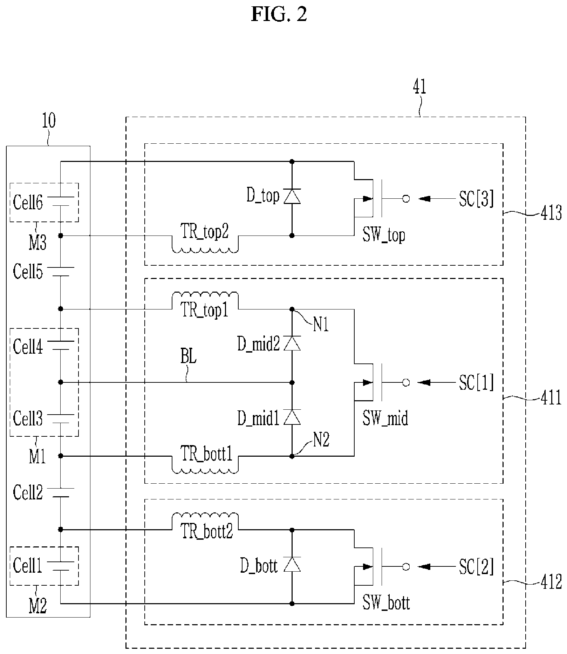

FIG. 1 is a block diagram showing a battery system according to an embodiment; and FIGS. 2 to 6 are example views each showing in detail the battery and charge equalization circuit of FIG. 1.

Referring to FIG. 1, a battery system 1 may include a battery 10, a current sensor 20, a relay 30, and a battery management system (hereinafter, "BMS") 40.

As shown in FIG. 1, the battery 10 may be connected between two output terminals OUT1 and OUT2 of the battery system 1, the relay 30 may be connected between a positive electrode of the battery system 1 and the first output terminal OUT1, and the current sensor 20 may be connected between a negative electrode of the battery system 1 and the second output terminal OUT2. The components and a connection relationship between the components, shown in FIG. 1, are examples, and the present disclosure is not limited thereto.

The battery 10 may include a plurality of battery cells Cell1 to Celln electrically connected in series with each other. In some embodiments, the battery cell may be a rechargeable secondary battery. FIG. 1 shows that the battery 10 includes six battery cells Cell1 to Cell6 connected in series with each other, is not limited thereto, and the battery 10 may include a various number of battery cells. In addition, among the six battery cells Cell1 to Cell6 shown in FIG. 1, the first battery cell Cell1 may have the minimum potential, and the sixth battery cell Cell6 may have the maximum potential, and the second battery cell Cell2 to the fifth battery cell Cell5 may have potentials gradually increased in an order.

In some embodiments, the plurality of battery cells Cell1 to Celln connected in series with each other may be grouped into a first module including the plurality of central cells disposed within a central potential range based on to a predetermined standard, a second module including at least one lower cell disposed within a lower potential range, and a third module including at least one upper cell disposed within an upper potential range.

When the respective potentials of the plurality of battery cells Cell1 to Celln are listed in a size order, the central potential range may include a central potential and a potential falling within the upper or lower range of a predetermined size from the central potential. When the respective potentials of the plurality of battery cells Cell1 to Celln are listed in the size order, the lower potential range may include the minimum potential and a potential falling within a range of a predetermined size from the minimum potential. When the respective potentials of the plurality of battery cells Cell1 to Celln are listed in the size order, the upper potential range may include the maximum potential and a potential falling within a range of a predetermined size from the maximum potential.

In some embodiments, referring to FIG. 2, assume that the battery 10 includes the six battery cells Cell1 to Cell6 connected in series with each other. In addition, assume that the first module includes two battery cells, and each of the second and third modules includes one battery cell.

For example, referring to FIG. 2, each potential of the third battery cell Cell3 and fourth battery cell Cell4 belongs to the central potential, and each of the third battery cell Cell3 and the fourth battery cell Cell4 may thus correspond to the central cell. The potential of the first battery cell Cell1 may belong to a lower potential, and the first battery cell Cell1 may thus correspond to the lower cell. The potential of the sixth battery cell Cell6 may belong to an upper potential, and the sixth battery cell Cell6 may thus correspond to the upper cell. That is, the first module may include the third battery cell Cell3 and the fourth battery cell Cell4 each corresponding to the central cell. The second module may include the first battery cell Cell1 corresponding to the lower cell. The third module may include the sixth battery cell Cell6 corresponding to the upper cell.

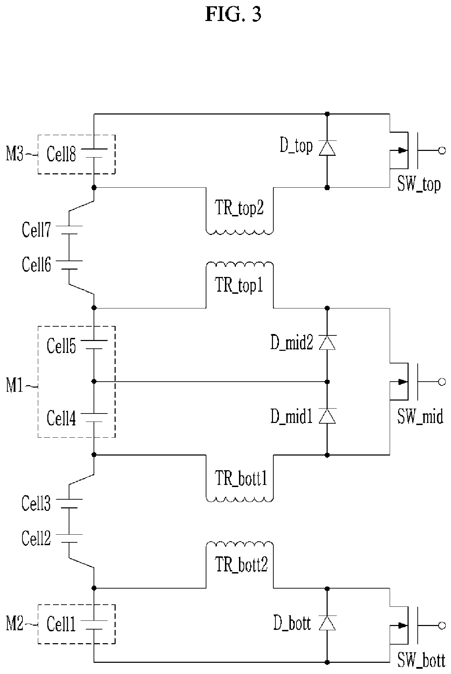

In another embodiment, referring to FIG. 3, assume that the battery 10 includes the eight battery cells Cell1 to Cell8 connected in series with each other. In addition, assume that the first module includes two battery cells, and each of the second and third modules includes one battery cell.

Referring to FIG. 3, each potential of the fourth battery cell Cell4 and the fifth battery cell Cell5 belongs to the central potential, and each of the fourth battery cell Cell4 and the fifth battery cell Cell5 may thus correspond to the central cell. The potential of the first battery cell Cell1 may belong to the lower potential, and the first battery cell Cell1 may thus correspond to the lower cell. The potential of the eighth battery cell Cell8 may belong to the upper potential, and the eighth battery cell Cell8 may thus correspond to the upper cell. That is, the first module may include the fourth battery cell Cell4 and the fifth battery cell Cell5 each corresponding to the central cell. The second module may include the first battery cell Cell1 corresponding to the lower cell. The third module may include the eighth battery cell Cell8 corresponding to the upper cell.

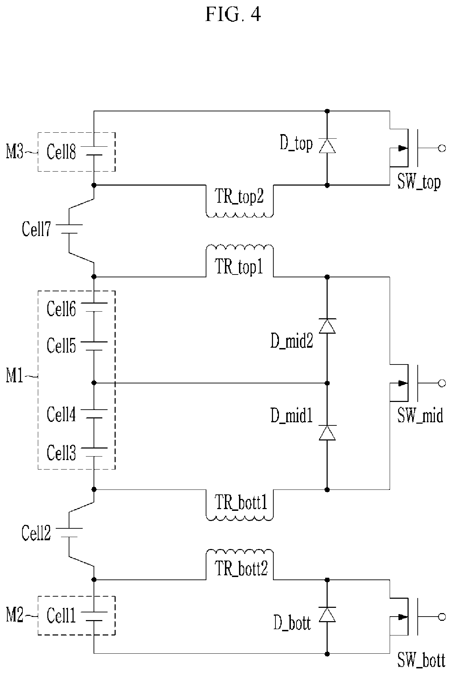

In still another embodiment, referring to FIG. 4, assume that the battery 10 includes the eight battery cells Cell1 to Cell8 connected in series with each other. In addition, assume that the first module includes four battery cells, and each of the second and third modules includes one battery cell.

Referring to FIG. 4, each potential of the fourth battery cell Cell4 and the fifth battery cell Cell5 belongs to the central potential, and each of the fourth battery cell Cell4 and the fifth battery cell Cell5 may thus correspond to the central cell. The potential of the first battery cell Cell1 may belong to the lower potential, and the first battery cell Cell1 may thus correspond to the lower cell. The potential of the eighth battery cell Cell8 may belong to the upper potential, and the eighth battery cell Cell8 may thus correspond to the upper cell. That is, the first module may include the fourth battery cell Cell4 and the fifth battery cell Cell5 each belongs to the central potential. In addition, the first module may include a total of four central cells, and thus further include the third battery cell Cell3 and the sixth battery cell Cell6 each disposed to be adjacent to the central potential. That is, the first module may include the third, fourth, fifth, and sixth battery cells Cell3, Cell4, Cell5, and Cell6 each corresponding to the central cell. The second module may include the first battery cell Cell1 corresponding to the lower cell. The third module may include the eighth battery cell Cell8 corresponding to the upper cell.

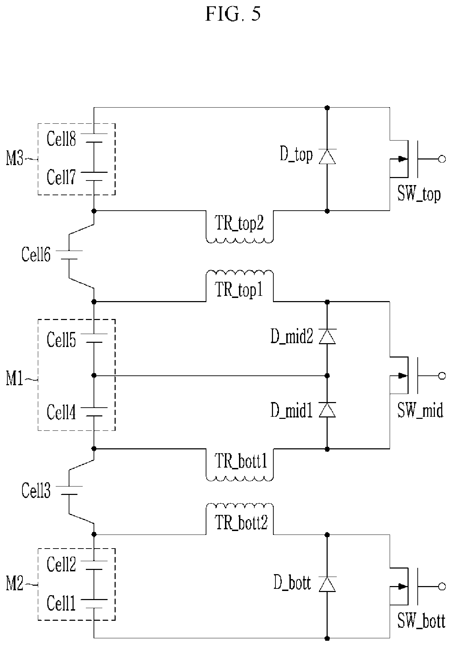

In addition, in yet another embodiment, referring to FIG. 5, assume that the battery 10 includes the eight battery cells Cell1 to Cell8 connected in series with each other. In addition, assume that each of the first module, second module, and third module includes two battery cells.

Referring to FIG. 5, each potential of the fourth battery cell Cell4 and the fifth battery cell Cell5 belongs to the central potential, and each of the fourth battery cell Cell4 and the fifth battery cell Cell5 may thus correspond to the central cell. The potential of the first battery cell Cell1 may belong to the lower potential, and the first battery cell Cell1 may thus correspond to the lower cell. The potential of the eighth battery cell Cell8 may belong to the upper potential, and the eighth battery cell Cell8 may thus correspond to the upper cell. That is, the first module may include the fourth battery cell Cell4 and the fifth battery cell Cell5 each corresponding to the central cell. The second module may include the first battery cell Cell1 belonging to the lower potential. In addition, the second module may include two battery cells, and thus further include the second battery cell Cell2 disposed to be adjacent to the lower potential. That is, the second module may include the first battery cell Cell1 and the second battery cell Cell2. The third module may include the eighth battery cell Cell8 belonging to the upper potential. In addition, the third module may include two battery cells, and thus further include the seventh battery cell Cell7 disposed to be adjacent to the upper potential. That is, the third module may include the seventh battery cell Cell7 and the eighth battery cell Cell8.

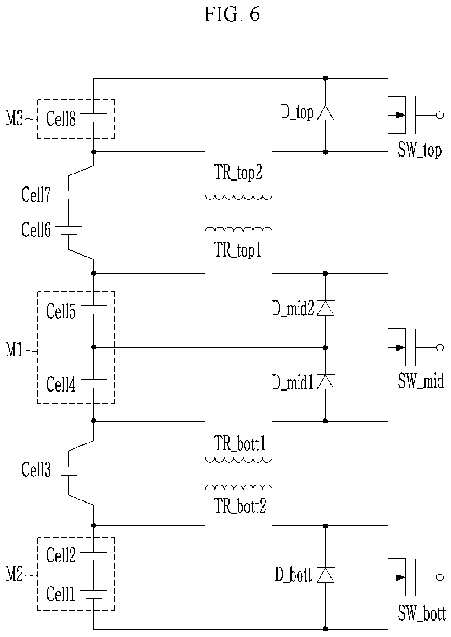

In still yet another embodiment, referring to FIG. 6, assume that the battery 10 includes the eight battery cells Cell1 to Cell8 connected in series with each other. In addition, assume that each of the first module and the second module includes two battery cells, and the third module includes one battery cell.

Referring to FIG. 6, each potential of the fourth battery cell Cell4 and the fifth battery cell Cell5 belongs to the central potential, and each of the fourth battery cell Cell4 and the fifth battery cell Cell5 may thus correspond to the central cell. The potential of the first battery cell Cell1 may belong to the lower potential, and the first battery cell Cell1 may thus correspond to the lower cell. The potential of the eighth battery cell Cell8 may belong to the upper potential, and the eighth battery cell Cell8 may thus correspond to the upper cell. That is, the first module may include the fourth battery cell Cell4 and the fifth battery cell Cell5 each corresponding to the central cell. The second module may include the first battery cell Cell1 belonging to the lower potential. In addition, the second module may include two battery cells, and thus further include the second battery cell Cell2 disposed to be adjacent to the lower potential. That is, the second module may include the first battery cell Cell1 and the second battery cell Cell2. The third module may include the eighth battery cell Cell8 corresponding to the upper cell.

In some embodiments, referring to FIGS. 2 to 6, the first module may include the plurality of central cells corresponding to integer multiples of an even number. The second module may include at least one lower cell. The third module may include at least one upper cell.

The current sensor 20 may be connected in series to a current path between the battery 10 and an external device. The current sensor 20 may measure a battery current flowing through the battery 10, that is, a charging current or a discharging current, and transfer a measurement result to the BMS 40.

The relay 30 may control electrical connection between the battery system 1 and the external device. When the relay 30 is turned on, the battery system 1 and the external device may be electrically connected to each other to thus perform the charging or discharging of the battery, and when the relay 30 is turned off, the battery system 1 and the external device may be electrically disconnected from each other. Here, the external device may be a charger in a charging cycle in which the battery 10 receives power to thus be charged, and may be a load in a discharging cycle in which the battery 10 discharges power to the external device.

The BMS 40 may include a charge equalization circuit 41, a monitoring integrated circuit (IC) 43, and a control unit 45.

The charge equalization circuit 41 may perform module balancing between the first module, the second module, and the third module. Hereinafter, referring to FIG. 2, the description is provided assuming that a first module M1 includes the third battery cell Cell3 and the fourth battery cell Cell4, a second module M2 includes the first battery cell Cell1, and a third module M3 includes the sixth battery cell Cell6. However, the present disclosure is not limited thereto, and a content described below may be equally applied to various embodiments such as embodiments described with reference to FIGS. 3 to 6.

Referring to FIGS. 1 and 2, the charge equalization circuit 41 may include a plurality of balancing switches SW_mid, SW_bott, and SW_top, a plurality of inductors TR_top1, TR_bott1, TR_top2, and TR_bott2, and a plurality of diodes D_mid1, D_mid2, D_bott, and D_top.

The plurality of inductors TR_top1, TR_bott1, TR_top2, and TR_bott2 may form an upper transformer and a lower transformer. As shown in FIG. 2, the upper transformer may include the first upper inductor TR_top1 and the second upper inductor TR_top2, and the lower transformer may include the first lower inductor TR_bott1 and the second lower inductor TR_bott2.

Each of the plurality of balancing switches SW_mid, SW_bott, and SW_top may perform a switching operation based on a corresponding switching signal among the plurality of switching signals SC[1] to SC[3] supplied from the monitoring IC 43. A balancing switch SW_i corresponding to each of the first module M1, the second module M2, and the third module M3 may be connected between the positive and negative electrodes of a corresponding module Mi.

The balancing switch SW_i in each of the first module M1, the second module M2, and the third module M3 may be an electronic relay including a semiconductor switching element. The semiconductor switching element may use a metal-oxide field effect transistor (MOSFET), and is not limited thereto. For example, the balancing switch SW_i may be turned on by an on-level gate voltage and turned off by an off-level gate voltage.

In some embodiments, the charge equalization circuit 41 may include a first equalization circuit 411, a second equalization circuit 412, and a third equalization circuit 413.

The first equalization circuit 411 may include the central balancing switch SW_mid, the first upper inductor TR_top1 connected between a positive electrode of the first module M1 and one end of the central balancing switch SW_mid, the first lower inductor TR_bott1 connected between a negative electrode of the first module M1 and the other end of the central balancing switch SW_mid, the first central diode D_mid1 and the second central diode D_mid2 connected in series with each other between a first node N1 and a second node N2, and a balancing path BL connecting the center of the plurality of central cells Cell3 and Cell4 included in the first module M1 to the center of the first central diode D_mid1 and the second central diode D_mid2. Here, the first node N1 may be disposed between the first upper inductor TR_top1 and one end of the central balancing switch SW_mid, and the second node N2 may be disposed between the first lower inductor TR_bott1 and the other end of the central balancing switch SW_mid.

The second equalization circuit 412 may include the lower balancing switch SW_bott, the second lower inductor TR_bott2 connected between a positive electrode of the second module M2 and one end of the lower balancing switch SW_bott, and the lower diode D_bott connected between both ends of the lower balancing switch SW_bott. Here, one end of the lower diode D_bott may be connected between the second lower inductor TR_bott2 and one end of the lower balancing switch SW_bott, and the other end of the lower diode D_bott may be connected between a negative electrode of the second module M2 and the other end of the lower balancing switch SW_bott.

The third equalization circuit 413 may include the upper balancing switch SW_top, the second upper inductor TR_top2 connected between a negative electrode of the third module M3 and the other end of the upper balancing switch SW_top, and the upper diode D_top connected between both ends of the upper balancing switch SW_top. Here, one end of the upper diode D_top may be connected between a positive electrode of the third module M3 and one end of the upper balancing switch SW_top, and the other end of the upper diode D_top may be connected between the second upper inductor TR_top2 and the other end of the upper balancing switch SW_top.

The monitoring IC 43 may be electrically connected to the positive and negative electrodes of each of the plurality of battery cells Cell1 to Cell6, and measure a cell voltage of each of the plurality of battery cells Cell1 to Cell6. A battery current value measured by the current sensor 20 may be transferred to the monitoring IC 43. The monitoring IC 43 may transfer information on the measured cell voltage and battery current to the control unit 45.

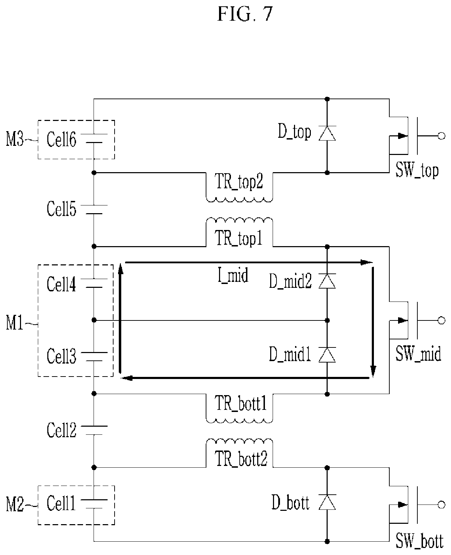

The monitoring IC 43 may transfer the plurality of switching signals SC[1] to SC[3] to the plurality of balancing switches SW_mid, SW_bott, and SW_top under control of the control unit 45. Each of the plurality of balancing switches SW_mid, SW_bott, and SW_top may then perform the switching operation based on the corresponding switching signal among the plurality of switching signals SC[1] to SC[3] supplied from the monitoring IC 43. However, the present disclosure is not limited thereto, and the control unit 45 may directly control the plurality of balancing switches SW_mid, SW_bott, and SW_top by transferring the plurality of switching signals SC[1] to SC[3] to the plurality of balancing switches SW_mid, SW_bott, and SW_top. Hereinafter, for convenience of explanation, the description describes that the control unit 45 directly controls the plurality of balancing switches SW_mid, SW_bott, and SW_top, and describes a specific method of controlling the plurality of balancing switches SW_mid, SW_bott, and SW_top below with reference to FIGS. 7 to 13.

The control unit 45 may determine an energy transfer direction based on each module voltage of the first module M1, the second module M2, and the third module M3, and control switching between the plurality of balancing switches SW_mid, SW_bott, and SW_top based on the determined energy transfer direction. The control unit 45 may thus perform the module balancing according to an embodiment.

The control unit 45 may determine each module voltage of the first module M1, the second module M2, and the third module M3 based on the cell voltage transferred by the monitoring IC 43. For example, referring to FIG. 2, the control unit 45 may determine the module voltage of the first module M1 by adding up the respective cell voltages of the third battery cell Cell3 and the fourth battery cell Cell4 connected in series with each other. In addition, the control unit 45 may determine the cell voltage of the first battery cell Cell1 as the module voltage of the second module M2, and the cell voltage of the sixth battery cell Cell6 as the module voltage of the third module M3.

In some embodiments, the control unit 45 may determine the energy transfer direction for energy to be transferred from a module having a higher module voltage to a module having a lower module voltage. For example, the module voltage of the first module M1 may be more than each module voltage of the second module M2 and third module M3. In this case, the control unit 45 may determine the energy transfer direction for energy to be transferred from the first module M1 to the second module M2 and the third module M3, that is, from the center of the battery 10 to the outside. For another example, each module voltage of the second module M2 and third module M3 may be more than the module voltage of the module M1. In this case, the control unit 45 may determine the energy transfer direction for energy to be transferred from the second module M2 and the third module M3 to the first module M1, that is, from the outside of the battery 10 to the center.

Hereinafter, the description describes a specific method of performing the module balancing in detail with reference to FIGS. 7 to 13. The module balancing method is described with reference to FIGS. 7 to 13 based on the circuit diagram shown in FIG. 2, is not limited thereto, and this module balancing method described below may be equally applied to circuit diagrams of various embodiments such as the embodiments described with reference to FIGS. 3 to 6.

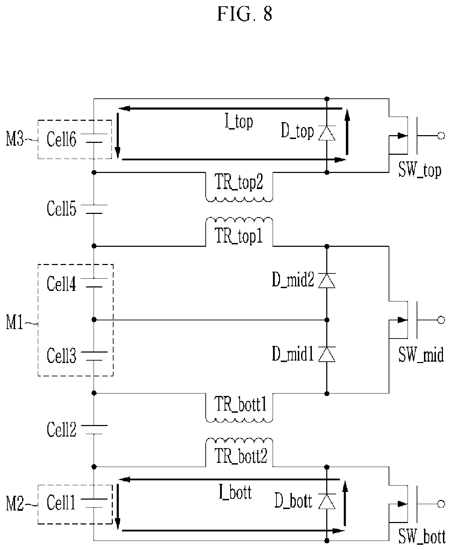

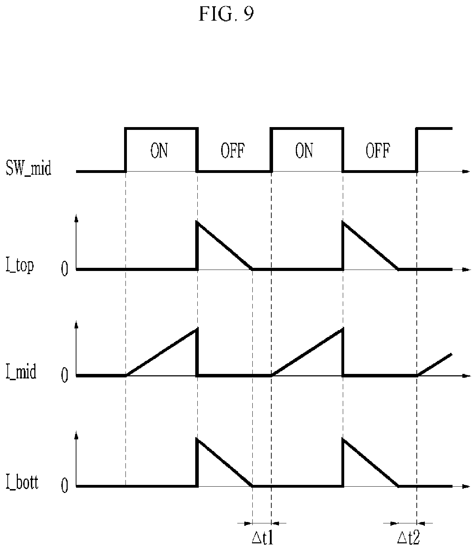

FIGS. 7 and 8 are example views each showing the charge equalization circuit transferring energy from the central module to an outer module; FIG. 9 is an example view showing a waveform of a current flowing through the central module and the outer module in FIGS. 7 and 8; and FIG. 10 is another example view showing the waveform of the current flowing through the central module and the outer module in FIGS. 7 and 8.

The central cell included in the battery 10 may have a higher deterioration level due to its temperature higher than the lower and upper cells disposed outside. Accordingly, in the charging cycle in which the battery 10 is charged with power from the external device, the voltage of the first module M1 including the central cell may reach an upper charging limit voltage before the voltage of the second module M2 including the lower cell or the third module M3 including the upper cell. In addition, in the discharging cycle in which the battery 10 supplies power to the external device, the voltage of the first module M1 including the central cell may reach a lower discharging limit voltage before the voltage of the second module M2 including the lower cell or the third module M3 including the upper cell. Here, the upper charging limit voltage is the maximum voltage for allowing the charging within a non-dangerous range, and the lower discharging limit voltage is the minimum voltage for allowing the discharging within the non-dangerous range.

Referring to FIGS. 7 and 8, for example, assume that the module voltage of first module M1 is more than each module voltage of the second module M2 and the third module M3. In this case, the control unit 45 may determine the energy transfer direction from the central module to the outer module for energy to be transferred from the first module M1 having the more module voltage to the second and third modules M2 and M3 each having a less module voltage.

First, referring to FIG. 7, the control unit 45 may control the central balancing switch SW_mid to be turned on. The first module M1 including the third battery cell Cell3 and the fourth battery cell Cell4 may then be discharged, and a central module current I_mid may flow through the central balancing switch SW_mid. Energy may be stored in the first upper inductor TR_top1 and the first lower inductor TR_bott1 by the central module current I_mid. That is, the third battery cell Cell3 and the fourth battery cell Cell4 may each be discharged.

Next, referring to FIG. 8, the control unit 45 may control the central balancing switch SW_mid to be turned off when a predetermined time elapses after controlling the central balancing switch SW_mid to be turned on. Due to a general electrical property of the transformer, a lower module current I_bott may then flow through the lower diode D_bott in a process in which energy stored in the first lower inductor TR_bott1 is transferred to the second lower inductor TR_bott2. In addition, due to the general electrical property of the transformer, an upper module current I_top may flow through the upper diode D_top in a process in which energy stored in the first upper inductor TR_top1 is transferred to the second upper inductor TR_top2. That is, the first battery cell Cell1 may be charged by the lower module current I_bott, and the sixth battery cell Cell6 may be charged by the upper module current I_top. Here, a principle of transferring energy in each of the upper transformer and the lower transformer is a well-known transformer principle, and its detailed description is thus omitted.

Referring to FIGS. 7 and 8, the first module M1 including the third battery cell Cell3 and the fourth battery cell Cell4 may be discharged when the central balancing switch SW_mid is turned on. The second module M2 including the first battery cell Cell1 and the third module M3 including the sixth battery cell Cell6 may each be charged when the central balancing switch SW_mid is turned off. That is, energy may be transferred from the first module M1 to the second module M2 and the third module M3.

Referring to FIG. 9, when the central balancing switch SW_mid is turned on, the first module M1 and the central balancing switch SW_mid may be electrically connected to each other, thus forming the current path in the first equalization circuit 411. Here, a magnitude of the central module current I_mid may be gradually increased due to electrical interference of the first upper inductor TR_top1 and the first lower inductor TR_bott1. When the central balancing switch SW_mid is turned off, the first module M1 and the central balancing switch SW_mid may be electrically disconnected from each other, and the central module current I_mid may have a magnitude of zero. Here, each of the lower module current I_bott and the upper module current I_top may have a magnitude momentarily increased and then gradually decreased due to electrical interference of the second upper inductor TR_top2 and the second lower inductor TR_bott2. Here, based on an energy transfer magnitude, a time difference △t1 or △t2 may occur between a time point when each of the lower module current I_bott and the upper module current I_top has the magnitude of zero and a time point when the next central balancing switch SW_mid is turned on.

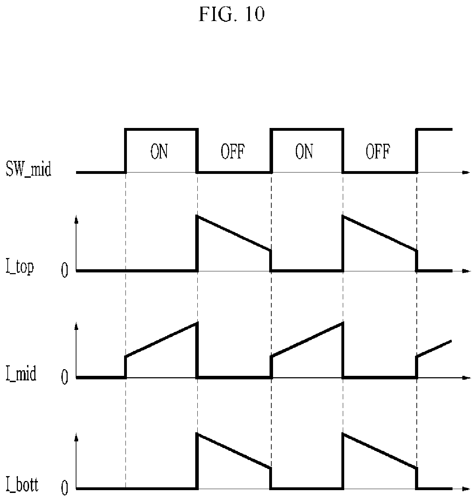

Referring to FIG. 10, the current of the lower module current I_bott and that of the upper module current I_top may have different waveforms based on various causes such as the magnitude of the central module current I_mid, or an on/off switching time of the central balancing switch SW_mid. The control unit 45 may control the on/off switching time of the central balancing switch SW_mid based on a voltage difference value between the first module M1, the second module M2, and the third module M3.

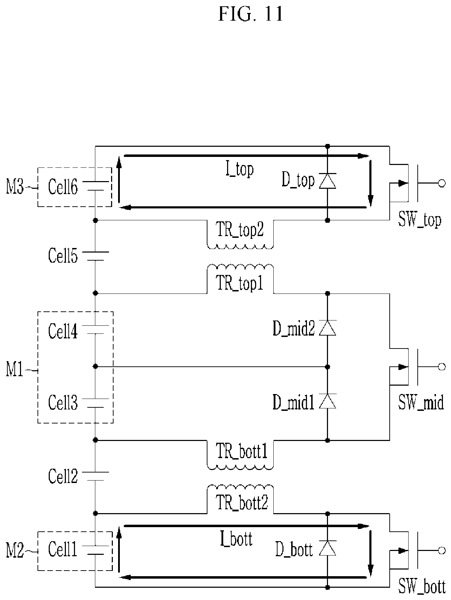

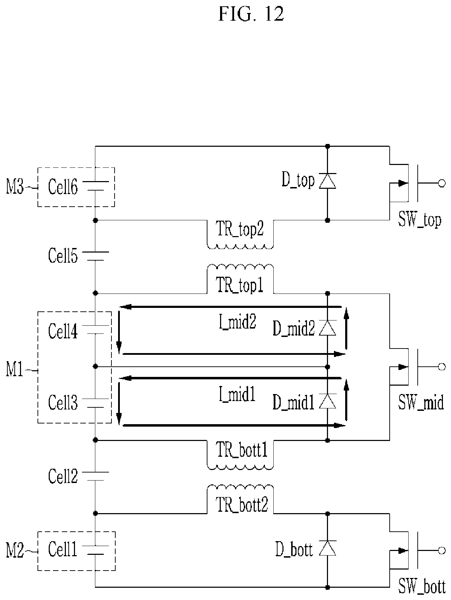

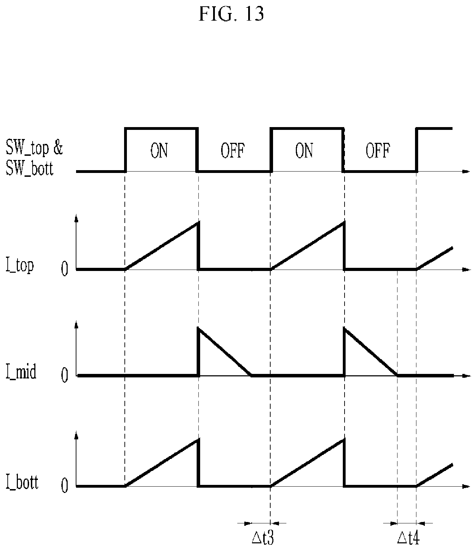

FIGS. 11 and 12 are example views each showing the charge equalization circuit transferring energy from the outer module to the central module; and FIG. 13 is an example view showing the waveform of the current flowing through the central module and the outer module in FIGS. 11 and 12.

Referring to FIGS. 11 and 12, for example, assume that each module voltage of the second module M2 and the third module M3 is more than the module voltage of the first module M1. In this case, the control unit 45 may determine the energy transfer direction from the outer module to the central module for energy to be transferred from the second and third modules M2 and M3 each having the more module voltage to the first module M1 having the less module voltage.

First, referring to FIG. 11, the control unit 45 may control the lower balancing switch SW_bott and the upper balancing switch SW_top to be turned on. The second module M2 including the first battery cell Cell1 may then be discharged, and the lower module current I_bott may flow through the lower balancing switch SW_bott. In addition, the third module M3 including the sixth battery cell Cell6 may be discharged, and the upper module current I_top may flow through the upper balancing switch SW_top. Energy may be stored in the second lower inductor TR_bott2 and the second upper inductor TR_top2 by the lower module current I_bott and the upper module current I_top. That is, the first battery cell Cell1 and the sixth battery cell Cell6 may each be discharged.

Next, referring to FIG. 12, the control unit 45 may control the lower balancing switch SW_bott and the upper balancing switch SW_top to be turned off when the predetermined time elapses after controlling the lower balancing switch SW_bott and the upper balancing switch SW_top to be turned on. Due to the general electrical property of the transformer, a first central module current I_mid1 may thus flow through the first central diode D_mid1 in a process in which energy stored in the second lower inductor TR_bott2 is transferred to the first lower inductor TR_bott1. In addition, due to the general electrical property of the transformer, a second central module current I_mid2 may flow through the second central diode D_mid2 in a process in which energy stored in the second upper inductor TR_top2 is transferred to the first upper inductor TR_top1.

Referring to FIGS. 2 and 12, in the balancing path BL, directions of the first central module current I_mid1 and the second central module current I_mid2 may be opposite to each other. For example, no current may flow in the balancing path BL because the current is offset when the first central module current I_mid1 and the second central module current I_mid2 have the same magnitude as each other. For another example, a slight amount of current may flow in the balancing path BL because the current is offset when the first central module current I_mid1 and the second central module current I_mid2 have the same magnitude as each other. FIG. 12 shows both the first central module current I_mid1 and the second central module current I_mid2 flowing in the balancing path BL, the present disclosure is not limited thereto, and no current may flow in the balancing path BL.

Referring to FIG 12, assume that the first central module current I_mid1 and the second central module current I_mid2 are included in the central module current I_mid. That is, the third battery cell Cell3 and the fourth battery cell Cell4 may be charged by the central module current I_mid. Here, the principle of transferring energy in each of the upper transformer and the lower transformer is the well-known transformer principle, and its detailed description is thus omitted.

Referring to FIGS. 11 and 12, the second module M2 including the first battery cell Cell1 and the third module M3 including the sixth battery cell Cell6 may be discharged when the lower balancing switch SW_bott and the upper balancing switch SW_top are turned on. The first module M1 including the third battery cell Cell3 and the fourth battery cell Cell4 may be charged when the lower balancing switch SW_bott and the upper balancing switch SW_top are turned off. That is, energy may be transferred from the second module M2 and the third module M3 to the first module M1.

Referring to FIGS. 2, 11, and 13, when the lower balancing switch SW_bott is turned on, the second module M2 and the lower balancing switch SW_bott may be electrically connected to each other to thus form the current path in the second equalization circuit 412. When the upper balancing switch SW_top is turned on, the third module M3 and the upper balancing switch SW_top may be electrically connected to each other to thus form the current path in the third equalization circuit 413. Here, each of the lower module current I_bott and the upper module current I_top may have the magnitude gradually increased due to electrical interference of the second lower inductor TR_bott2 and the second upper inductor TR_top2. When the lower balancing switch SW_bott and the upper balancing switch SW_top are turned off, the current path may disappear in each of the second equalization circuit 412 and the third equalization circuit 413, and each of the lower module current I_bott and the upper module current I_top may have the magnitude of zero. Here, the magnitude of the central module current I_mid may be momentarily increased and then gradually decreased due to the electrical interference of the first lower inductor TR_bott1 and the first upper inductor TR_top1. Here, based on the energy transfer magnitude, a time difference △t3 or △t4 may occur between a time point when the central module current I_mid has the magnitude of zero and a time point when the next lower balancing switch SW_bott and upper balancing switch SW_top are turned on.

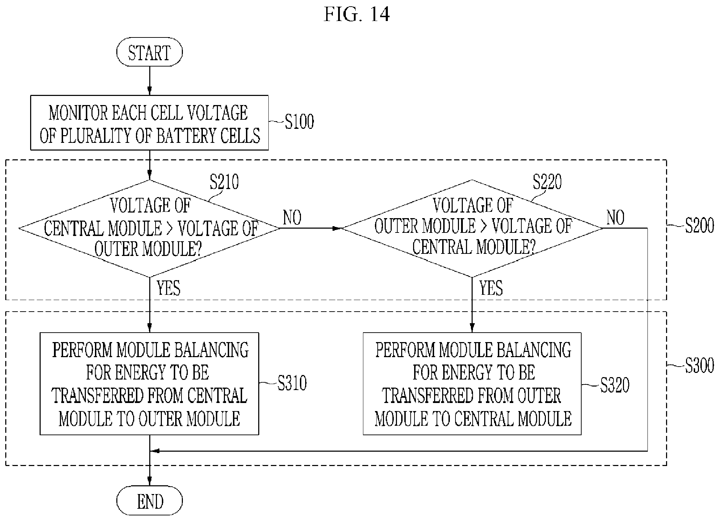

FIG. 14 is a flowchart showing a module balancing method according to another embodiment.

The description describes the module balancing method and the battery management system in detail with reference to FIGS. 1 to 14.

Referring to FIG. 14, the BMS 40 may monitor each cell voltage of the plurality of battery cells Cell1 to Cell6 (S100).

The BMS 40 may determine each module voltage of the first module M1, the second module M2, and the third module M3 based on the plurality of battery cell voltages of the plurality of battery cells Cell1 to Cell6. For example, referring to FIG. 2, the BMS 40 may determine the module voltage of the first module M1 by adding up the respective cell voltages of the third battery cell Cell3 and the fourth battery cell Cell4 connected in series with each other. In addition, the BMS 40 may determine the cell voltage of the first battery cell Cell1 as the module voltage of the second module M2, and the cell voltage of the sixth battery cell Cell6 as the module voltage of the third module M3. Hereinafter, the first module M1 may correspond to the central module, and the second module M2 and the third module M3 may correspond to the outer modules.

Next, the BMS 40 may determine the energy transfer direction by comparing the voltage of the central module with the voltage of the outer module (S200).

In the step S200, the BMS 40 may determine whether the voltage of the central module is more than the voltage of the outer module (S210).

For example, referring to FIG. 7, assume that the module voltage of the first module M1 is more than each module voltage of the second module M2 and the third module M3. In this case, the BMS 40 may determine the energy transfer direction from the central module to the outer module for energy to be transferred from the first module M1 having the more module voltage to the second and third modules M2 and M3 each having the less module voltage.

In the step S200, when the voltage of the central module is less than the voltage of the outer module (No in S210), the BMS 40 may determine whether the voltage of the outer module is more than the voltage of the central module (S220).

For example, referring to FIG. 12, assume that each module voltage of the second module M2 and the third module M3 is more than the module voltage of the first module M1. In this case, the BMS 40 may determine the energy transfer direction from the outer module to the central module for energy to be transferred from the second and third modules M2 and M3 each having the more module voltage to the first module M1 having the less module voltage.

In the step S200, when the voltages of the central module and the voltage of the outer module have the same magnitude as each other (No in S220), the BMS 40 may not perform the module balancing.

Next, the BMS 40 may perform the module balancing for energy to be transferred in the determined energy transfer direction (S300).

In the step S300, when the voltage of the central module is more than the voltage of the outer module (Yes in S210), the BMS 40 may perform the module balancing for energy to be transferred from the central module to the outer module (S310).

For example, referring to FIG. 7, the BMS 40 may control the central balancing switch SW_mid to be turned on. The first module M1, which is the central module, may then be discharged, and the central module current I_mid may flow through the central balancing switch SW_mid. Energy may be stored in the first upper inductor TR_top1 and the first lower inductor TR_bott1 by the central module current I_mid. That is, the first module M1, which is the central module, may be discharged.

Referring to FIG. 8, the BMS 40 may control the central balancing switch SW_mid to be turned off when the predetermined time elapses after controlling the central balancing switch SW_mid to be turned on. The lower module current I_bott may then flow through the lower diode D_bott in the process in which energy stored in the first lower inductor TR_bott1 is transferred to the second lower inductor TR_bott2 due to the general electrical property of the transformer. In addition, due to the general electrical property of the transformer, the upper module current I_top may flow through the upper diode D_top in the process in which energy stored in the first upper inductor TR_top1 is transferred to the second upper inductor TR_top2. That is, the first battery cell Cell1 may be charged by the lower module current I_bott, and the sixth battery cell Cell6 may be charged by the upper module current I_top. Here, the principle of transferring energy in each of the upper transformer and the lower transformer is the well-known transformer principle, and its detailed description is thus omitted.

In summary, the BMS 40 may control the central balancing switch SW_mid to be turned off when the predetermined time elapses after controlling the central balancing switch SW_mid to be turned on. Energy may then be transferred from the first module M1, which is the central module, to the second module M2 and the third module M3, which are the outer modules. In some embodiments, the BMS 40 may repeat the turn on/turn off switching control of the central balancing switch SW_mid until each module voltage of the first module M1, the second module M2, and the third module M3 falls within a predetermined error range.

In the step S300, when the voltage of the outer module is more than the voltage of the central module (Yes in S220), the BMS 40 may perform the module balancing for energy to be transferred from the outer module to the central module (S320).

For example, referring to FIG. 11, the BMS 40 may control the lower balancing switch SW_bott and the upper balancing switch SW_top to be turned on. The second module M2, which is the outer module, may then be discharged, and the lower module current I_bott may flow through the lower balancing switch SW_bott. In addition, the third module M3, which is another outer module, may be discharged, and the upper module current I_top may flow through the upper balancing switch SW_top. Energy may be stored in the second lower inductor TR_bott2 and the second upper inductor TR_top2 by the lower module current I_bott and the upper module current I_top. That is, the second module M2 and the third module M3 may be discharged.

Referring to FIG. 12, the BMS 40 may control the lower balancing switch SW_bott and the upper balancing switch SW_top to be turned off when the predetermined time elapses after controlling the lower balancing switch SW_bott and the upper balancing switch SW_top to be turned on. Due the general electrical property of the transformer, the first central module current I_mid1 may thus flow through the first central diode D_mid1 in the process in which energy stored in the second lower inductor TR_bott2 is transferred to the first lower inductor TR_bott1. In addition, due to the general electrical property of the transformer, the second central module current I_mid2 may flow through the second central diode D_mid2 in the process in which energy stored in the second upper inductor TR_top2 is transferred to the first upper inductor TR_top1.

In summary, the BMS 40 may control the lower balancing switch SW_bott and the upper balancing switch SW_top to be turned off when the predetermined time elapses after controlling the lower balancing switch SW_bott and the upper balancing switch SW_top to be turned on. Energy in the second module M2 and the third module M3, which are the outer modules, may then be transferred to the first module M1, which is the central module. In some embodiments, the BMS 40 may repeat the turn on/turn off switching control of the lower balancing switch SW_bott and the upper balancing switch SW_top until each module voltage of the first module M1, the second module M2, and the third module M3 falls within the predetermined error range.

Although the embodiments of the present disclosure have been described in detail hereinabove, the scope of the present disclosure is not limited thereto. Various modifications and improvements made by those skilled in the art to which the present disclosure pertains also belong to the scope of the present disclosure.

## Claims

1. A battery management system comprising:
a charge equalization circuit performing module balancing between a first module including a plurality of central cells each having a potential falling within a central potential range, a second module including at least one lower cell having a potential falling within a lower potential range, and a third module including at least one upper cell having a potential falling within an upper potential range, among the plurality of battery cells connected in series with each other; and
a control unit calculating each module voltage of the first module, the second module, and the third module based on each cell voltage of the plurality of battery cells, determining an energy transfer direction based on the calculated module voltage, and controlling the module balancing based on the determined energy transfer direction.

2. The system of claim 1, wherein
the central potential range includes
a central potential disposed in a center of a plurality of potential sizes of the plurality of battery cells and a potential falling within the upper or lower range of a predetermined size from the central potential,
the lower potential range includes
a minimum potential among the plurality of potential sizes of the plurality of battery cells and a potential falling within a range of a predetermined size from the minimum potential, and
the upper potential range includes
a maximum potential among the plurality of potential sizes of the plurality of battery cells and a potential falling within a range of a predetermined size from the maximum potential.

3. The system of claim 1, wherein
the first module includes
the plurality of central cells corresponding to integer multiples of an even number.

4. The system of claim 1, wherein
the charge equalization circuit includes
a first equalization circuit including a central balancing switch, a first upper inductor connected between a positive electrode of the first module and one end of the central balancing switch, a first lower inductor connected between a negative electrode of the first module and the other end of the central balancing switch, a first central diode and a second central diode connected in series with each other between a first node and a second node, and a balancing path connecting a center of the plurality of central cells included in the first module to a center of the first central diode and the second central diode,
the first node is disposed between the first upper inductor and one end of the central balancing switch, and
the second node is disposed between the first lower inductor and the other end of the central balancing switch.

5. The system of claim 4, wherein
the charge equalization circuit includes
a second equalization circuit including a lower balancing switch, a second lower inductor connected between a positive electrode of the second module and one end of the lower balancing switch, and a lower diode connected between both ends of the lower balancing switch.

6. The system of claim 5, wherein
the charge equalization circuit includes
a third equalization circuit including an upper balancing switch, a second upper inductor connected between a negative electrode of the third module and the other end of the upper balancing switch, and an upper diode connected between both ends of the upper balancing switch.

7. The system of claim 4, wherein
the control unit controls
the central balancing switch to be turned off when a predetermined time elapses after turning on the central balancing switch when the module voltage of the first module is more than each module voltage of the second module and the third module.

8. The system of claim 6, wherein
the control unit controls
the lower balancing switch and the upper balancing switch to be turned off when a predetermined time elapses after turning on the lower balancing switch and the upper balancing switch when each module voltage of the second module and the third module is more than the module voltage of the first module.

9. A module balancing method, which is a method of performing module balancing between a plurality of battery modules, comprising:
monitoring a cell voltage of the plurality of battery cells connected in series with each other to determine each module voltage of a first module including a plurality of central cells each having a potential falling within a central potential range, a second module including at least one lower cell having a potential falling within a lower potential range, and a third module including at least one upper cell having a potential falling within an upper potential range, among the plurality of battery cells connected in series with each other;
determining an energy transfer direction by comparing the module voltage of the first module with each module voltage of the second module and the third module; and
performing the module balancing between the first module, the second module, and the third module for energy to be transferred in the determined energy transfer direction.

10. The method of claim 9, wherein
the determining of the energy transfer direction includes
determining whether the module voltage of the first module is more than each module voltage of the second module and the third module, and
determining whether each module voltage of the second module and the third module is more than the module voltage of the first module when the module voltage of the first module is not more than each module voltage of the second module and the third module as a determination result.

11. The method of claim 10, wherein
the performing of the module balancing includes
performing the module balancing for energy to be transferred from the first module to the second module and the third module when the module voltage of the first module is more than each module voltage of the second module and the third module, and
performing the module balancing for energy to be transferred from the second module and the third module to the first module when each module voltage of the second module and the third module is more than the module voltage of the first module.
